# EUROPEAN PATENT SPECIFICATION

(11) **EP 3 392 496 B1**
(45) Date of publication and mention of the grant of the patent: **08.05.2019**
(21) Application number: 17167497.1
(22) Date of filing: 21.04.2017
(51) Int. Cl.: F02M 25/08, B60K 15/035

(54) **CANISTER FOR FILTERING FUEL VAPOURS FROM A MOTOR-VEHICLE FUEL TANK**
KANISTER ZUM FILTERN VON KRAFTSTOFFDÄMPFEN AUS EINEM KRAFTFAHRZEUGKRAFTSTOFFTANK
ABSORBEUR DESTINÉ À FILTRER DES VAPEURS DE CARBURANT DEPUIS UN RÉSERVOIR DE CARBURANT DE VÉHICULE À MOTEUR

(43) Date of publication of application: 24.10.2018
(73) Proprietor: FCA Italy S.p.A., 10135 Torino (IT)
(72) Inventor: RIAUDO, Marco, 10135 Torino (IT); SPADA, Luigi, 10135 Torino (IT)
(74) Representative: Notaro, Giancarlo

(56) References cited:
- US-A- 4 717 401
- US-A- 5 538 543
- US-A1- 2012 012 474

## Description

### Field of the invention

The present invention relates to devices called "canisters" of the type which is to be connected to a vent conduit of a motor-vehicle fuel tank and provided with a filtering means (such as a filter with active carbons) for adsorbing fuel vapours which are located within the tank and within the vent conduit, in order to avoid that these vapours are dispersed in the atmosphere.

More particularly, the invention relates to a canister of the type comprising a hollow body defining at least one chamber containing a material for adsorbing fuel vapours, in the form of particles or granules, wherein said hollow body has a first opening for communication to a vent conduit of the tank, a second opening in communication with the atmosphere and a third opening for communication to a conduit connected to the intake manifold of the internal combustion engine of the motor-vehicle.

In devices of the above indicated type, when the internal combustion engine is inactive, the fuel vapours coming from the tank are adsorbed by the above mentioned adsorbing material, whereas when the internal combustion engine is in operation, an air flow taken from the atmosphere is drawn into the chamber of the canister through said first opening and is guided through the adsorbing material into the conduit connected to the intake manifold of the internal combustion engine, thereby achieving a scavenging of the adsorbing material and removal and conveyance into the engine of the fuel particles previously adsorbed by the adsorbing material.

### Prior art

A canister of the above indicated type is disclosed for example in document WO 2015 104813 A1. In canisters of the above indicated type there is the problem of ensuring an efficient removal of the fuel particles which are adsorbed during the above mentioned scavenging stage.

A canister according to the preamble of claim 1 is known from US-A- 5 538 543.

### Object of the invention

The object of the present invention is that of providing a canister of the above indicated type which ensures a high efficiency in operation, in particular during the scavenging stage, and that in spite of this has an extremely simple, light and inexpensive structure.

### Summary of the invention

In view of achieving this object, the invention provides a canister having the features of claim 1.

Due to the above mentioned features, during the above mentioned scavenging stage, the air flow through the adsorbing material which is contained within the canister is compelled to follow a tortuous path, at a relatively low speed, so as to pass through all the areas of the inner chamber of the canister, including those areas which otherwise would behave as "dead spots" with respect to the main air flow. In this manner, a high efficiency of the scavenging stage is achieved, without that this involves a complication in the structure of the canister or an increase of weight or an increase in its cost of manufacture. The above mentioned result is indeed obtained by providing the above mentioned flexible sheets impervious to air which are freely floatably supported within the particles or granules of adsorbing material, hence without requiring any complication in the structure and in the manufacture of the canister and without any appreciable increase of its weight. The provision of freely floating flexible sheets within the particles of adsorbing material further ensures which the pressure within the granules of adsorbing material is not substantially altered.

In the preferred embodiment, the material constituting said flexible sheets impervious to air is selected between felt, paper or paperboard, synthetic material, metal material.

By arranging the above mentioned first sheet and the above mentioned second sheet at longitudinally spaced positions, and by providing, if necessary, further sheets similar to said first sheet and/or said second sheet at further longitudinally spaced positions, the airflow through the canister during the scavenging stage is compelled to pass alternatively near the periphery and near the centre of the chamber of the canister, thus advancing through the chamber in such a way as to reach all the areas of the chamber, including those areas which otherwise would behave as "dead spots", with respect to the main airflow, in the case that the above mentioned flexible sheets were not provided.

Naturally, the device according to the invention is extremely simpler, lighter and more cost-effective with respect to the structure of a canister provided with rigid inner walls within the chamber of the canister, these inner walls being rigidly connected to the walls of the canister, in order to define a tortuous path.

### Detailed description of preferred embodiments

Further features and advantages of the invention will become apparent from the following description with reference to the annexed drawings, given purely by way of non limiting example, in which:
- figure 1 is a diagrammatic view of a system for fuel supply to a motor-vehicle engine, of the type to which the canister according to the invention is applicable,
- figure 2 is a cross-sectional view of a canister according to the prior art,
- figure 3 is a cross-sectional view of a canister according to one embodiment of the present invention,
- figure 4 is a perspective view of three flexible sheets provided within the canister of figure 3,
- figure 5 is a cross-sectional view of an alternative embodiment, and
- figure 6 shows a perspective view of a single flexible sheet of helical shape, according to a further variant which does not form part of the invention.

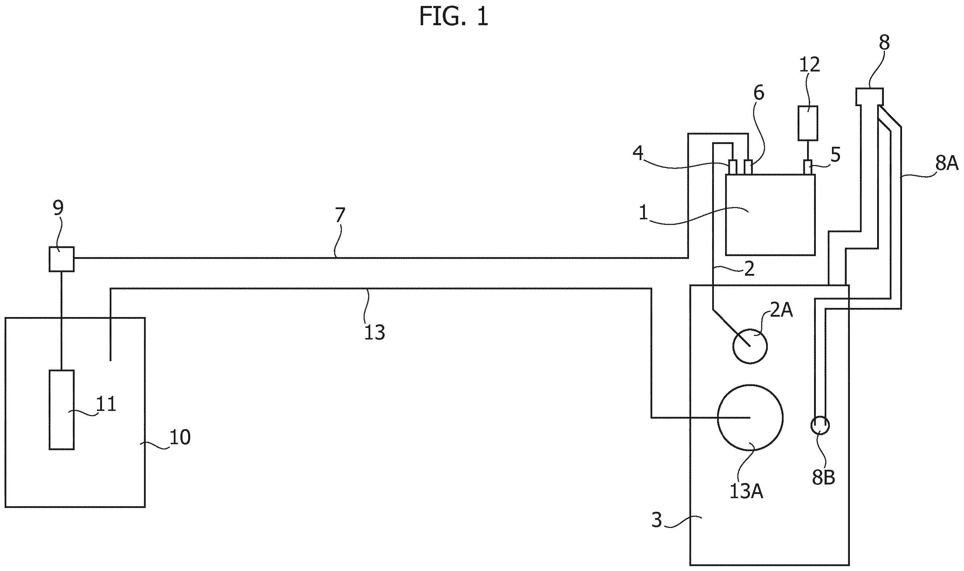

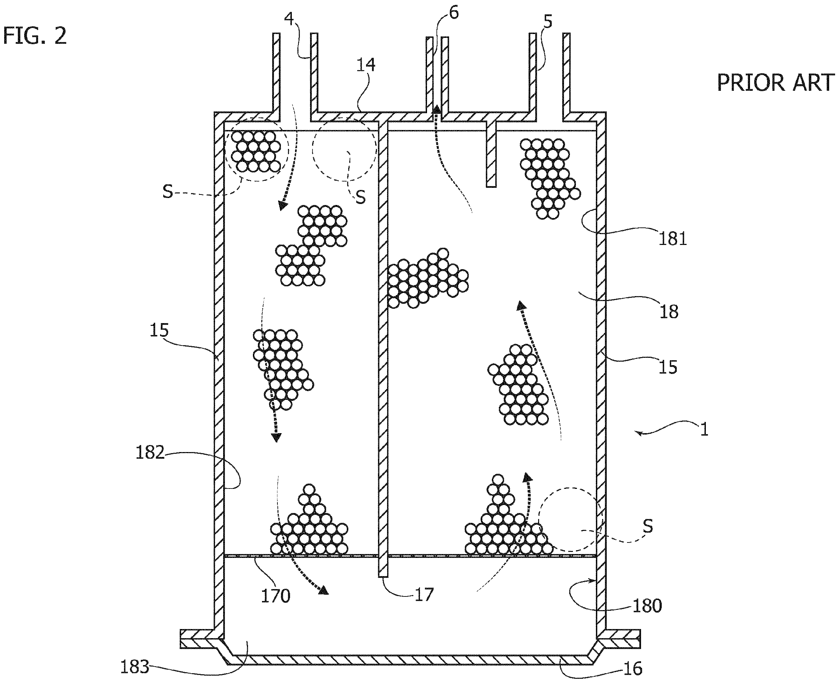

Figure 1 shows a diagrammatic view of a system for fuel supply to a motor-vehicle engine, comprising a canister 1. With reference also to figure 2, which relates to a canister according to the prior art, canister 1 generally has a hollow body containing adsorbing material 18 in the form of granules or particles, typically constituted by active carbons, and adapted to adsorbing fuel vapours coming from a fuel tank 3. Canister 1 has a first opening 4 communicating with the fuel tank 3 trough a vent conduit 2. Canister 1 further has a second opening 5 communicating with the atmosphere through a passage in which an air filter 12 is interposed, which is constituted of foamed plastic material or paper, having the function of protecting the canister from impurities during the scavenging stage. Furthermore, canister 1 has a third opening 6 communicating with the conduits 7 connected to the intake manifold 11 of the internal combustion engine 10 of the motor vehicle. The communication between the canister 1 and the intake manifold 11 is controlled by a valve 9 which is controlled by an electronic control unit, not illustrated here.

Also according to figure 1, the fuel tank 3 is in communication with the internal combustion engine 10 by means of a supply line 13 and a fuel pump 13A. The details relating to the injectors of the internal combustion engine which receive fuel through the line 13 are not disclosed herein, since they do not fall within the present invention. Furthermore, the deletion of these details from the drawings renders the latter simpler and easier to understand.

Figure 1 also shows the conduit 8 for filling the tank, with an associated recirculation conduit 8A. The communication of the supply line 13 and the vent conduit 2 with the tank are controlled by valves 8B and 2A. These valves enable only the fuel vapour to reach the canister 1, while preventing a passage of liquid fuel.

Figure 2 shows a cross-sectional view of a canister according to the prior art. The body of the canister has un upper wall 14 having the openings 4, 5, 6 which have been described above, a lower wall 16 and a side wall 15 which connects the upper and lower walls 14, 16. As a consequence of this, the canister 1 has a hollow body which defines a chamber 180 containing the granules or particles of adsorbing material 18, which are for adsorbing the fuel vapours generated by the fuel within the tank. In the specific example of figure 1, within the canister 1 there is provided an inner separating wall 17 which defines first and second sub-chambers 181, 182, arranged in series relative to each other and both containing adsorbing material 18. The number of sub-chambers and the way in which they are arranged within the canister may widely vary with respect to what is shown in figure 2. In particular, it is possible to have also a single chamber extending from one end to the other of the tank, with the openings 4, 6, 5 arranged at the opposite ends of this chamber.

The operation of the canister 1 according to the prior art which is shown in figure 2, includes a first adsorbing stage, in which when the internal combustion engine 10 of the motor-vehicle is inactive, the fuel vapours generated within the tank 3 flow through the vent conduit 2, enter into the first opening 4, pass through the adsorbing material 18 and exit from the opening 5. As a result of this process, only cleaned air is released from the opening 5 towards the atmosphere, since the fuel vapours are filtered by the adsorbing material 18. The operation of the canister 1 also includes a second scavenging stage which takes place when the internal combustion engine 10 is started. During this stage, a flow of fresh air is drawn into the opening 5 and conveyed through the chamber of the canister into opening 6. In this manner, a scavenging of the adsorbing material 18 is carried out by the air flow which passes through the canister, with a resulting removal of the fuel particles which were previously adsorbed during the adsorbing stage.

Again with reference to the example of figure 2, within the canister 1 there is defined a third sub-chamber 183 which has no adsorbing material 18. This third-sub chamber is arranged in series between the first and second sub-chambers 181, 182 containing the adsorbing material 18 and is formed inside canister 1. The adsorbing material 18 rests on an elastic net 170 which is anchored to the wall of the canister 1 at a distance from the bottom wall 16.

In figure 2, the arrows show the air flow which passes through the inner chamber of the canister starting from the opening 4 communicating with the atmosphere and ending at the opening 6 communicating with the intake manifold of the engine, during this scavenging stage which has been described above. As shown, it make happen that some areas of the inner chamber of the canister, such as those designated by S in figure 2, are areas neglected by the main air flow, so that the fuel particles which have been retained by the granules of adsorbing material at these areas are not efficiently removed.

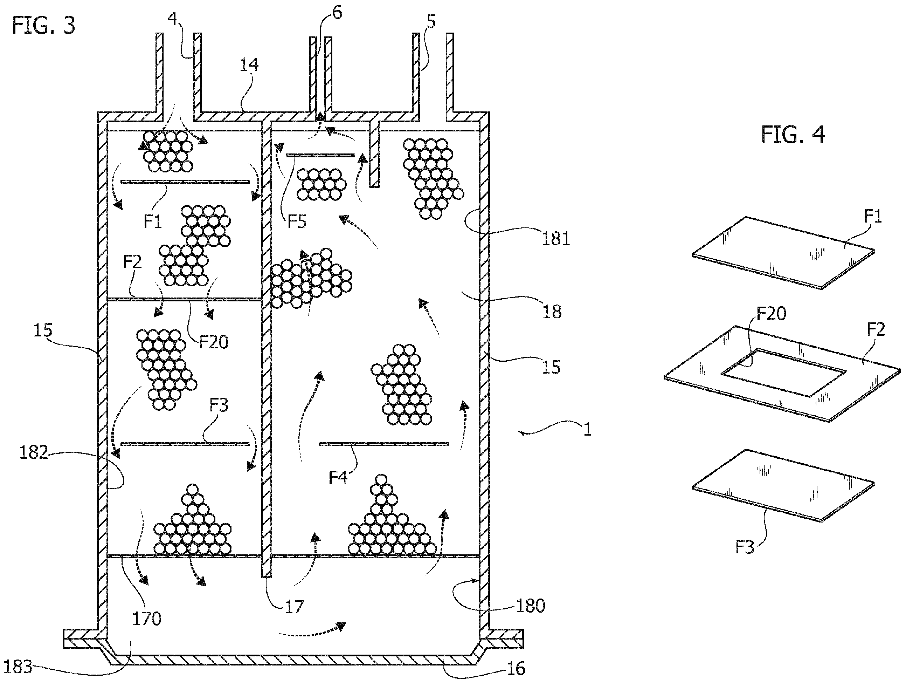

In order to overcome this drawback without requiring a complication or an increase of weight of the structure of the canister, the present invention provides, according to what is illustrated in figure 3, that within the chamber of canister 1 a number of divisions are provided simply constituted by flexible sheets F1, F2, F3, F5, floatably arranged between the particles or granules of the adsorbing material 18. These flexible sheets are constituted by a material substantially impervious to air, such as a layer of felt, a sheet of paper or cardboard, or a sheet constituted of synthetic material or also metal material, in this latter case with a thickness amounting to a few tens of millimeter.

In the specific illustrated example, the flexible sheets are of two types. According to a first type (sheets F1, F3, F4, F5) each sheet is arranged in a plane substantially orthogonal to the longitudinal direction of the inner chamber of the canister and occupies an area smaller than the area of the canister at said cross-section, so as to leave a peripheral area surrounding the flexible sheet free for passage of air. A second type of flexible sheets is constituted by the sheet designated by F2 in figure 3 and figure 4, which is also arranged in a plane orthogonal to the longitudinal direction of the chamber of the canister, which is longitudinally spaced from the adjacent flexible sheets. Sheet F2 has an area substantially corresponding to the area of the chamber along said cross-sectional plane, but has a central aperture F20 for passage of air.

In figures 3-5, the thickness of the flexible sheets has been exaggerated for clarity, but in the rear embodiment this thickness is very reduced and is for example in the order of a few tens of millimeter.

As visible in figure 3, the arrangement of the flexible sheets which have been described above can be selected in such a way as to cause the air flow through the canister during the scavenging stage to follow a tortuous path passing in particular also through areas S (figure 2) which otherwise would behave as "dead spots" with respect to the main airflow. The airflow is compelled also to reduce its speed. As a result, a high efficiency of the scavenging stage is achieved, with a structure which is extremely simple, light and inexpensive to manufacture.

It is well understood that the number, the configuration and the arrangement of the flexible sheets may widely vary with respect to the illustrated example (it is also possible to provide a single flexible sheet). Similarly, the structure and configuration of the canister may widely vary with respect to the example illustrated in figure 3. As a further example, figure 4 shows an embodiment of the canister where a single inner chamber is provided, without the dividing wall 17 which defines the two sub-chambers in the solutions shown in figures 2, 3.

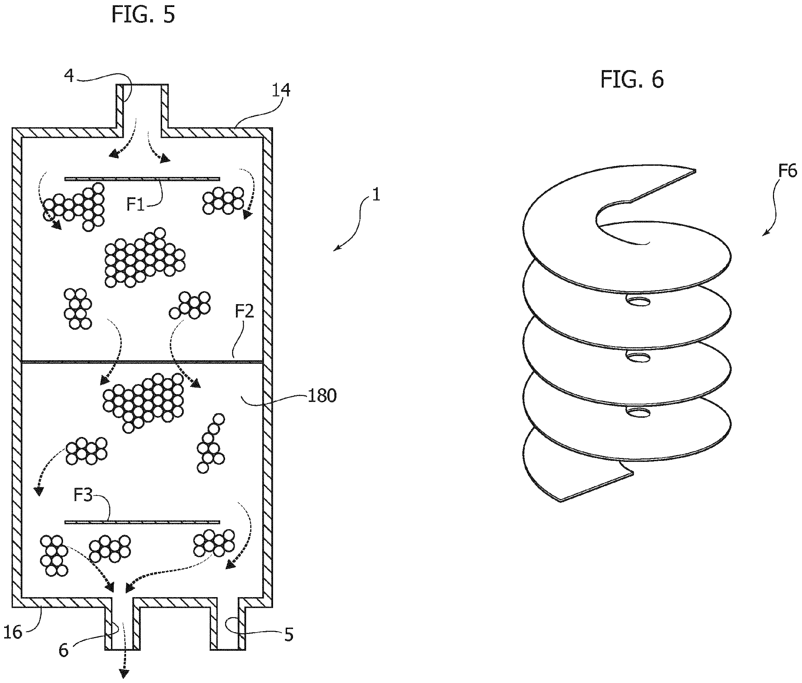

Finally, in a further variant not forming part of the present invention, which is applicable particularly to the case of a canister having a cylindrical body with a circular cross-section, there is provided a single flexible sheet in the form of a web F6 wound in a helix (figure 6), so as to define a helical path for the air flow which passes through the granules of adsorbing material during the scavenging stage.

## Claims

1. Canister (1) for filtering fuel vapours coming from a motor-vehicle fuel tank (3),
wherein said canister (1) comprises a hollow body defining at least one chamber (180) containing adsorbing material (18) for adsorbing fuel vapours, said material being in the form of particles or granules, and said canister having a first opening (4) for communication to a vent conduit (2) of the tank (3), a second opening (5) communicating with the atmosphere, and a third opening (6) for communication to a conduit (7) connected to the intake manifold (11) of the internal combustion engine (10) of the motor-vehicle,
in such a way that when the internal combustion engine (10) is inactive, any fuel vapours generated within the tank (3) are adsorbed by said adsorbing material (18), whereas when the internal combustion engine (10) is in operation, an air flow taken from the atmosphere through said second opening (5) is drawn into the chamber (180) of the canister (1) and conveyed through the adsorbing material (18) and through said third opening (6) towards said conduit (7) connected to the intake manifold (11) of the internal combustion engine (10), thereby obtaining a scavenging of the adsorbing material (18) with a removal and conveyance into the engine (10) of the fuel particles previously adsorbed by the adsorbing material (18),
wherein within the chamber (180) of the canister (1) there are arranged one or more sheets (F1, F2, F3, F4, F5, F6), of a material substantially impervious to air, which are freely floatably supported within the particles or granules of adsorbed material (18), in such a way as to define a tortuous path of communication between said second opening (4) communicating to the atmosphere and said third opening (7) communicating to the intake manifold (11) of the internal combustion engine (10),
wherein said at least one chamber (180;181,182) has two opposite end walls (14, 16) and extends along a longitudinal direction between said end walls, and said sheets (F1-F5) are arranged along planes substantially orthogonal to said longitudinal direction,
said canister being **characterized in that** said sheets impervious to air (F1-F6) are flexible sheets made of felt, paper or cardboard, synthetic material or metal material, floatably supported within the particles or granules of adsorbed material (18), including:
at least one first flexible sheet (F1) arranged substantially at the centre of said chamber, along a plane orthogonal to said longitudinal direction, and occupies an area which is smaller than the area of a cross-section of said chamber along said orthogonal plane, so as to leave a peripheral free space around said flexible sheet (F1) for passage of air, and
at least a second flexible sheet (F2) arranged substantially along a plane orthogonal to said longitudinal direction, which is longitudinally spaced from the plane of said first sheet (F1) and occupies substantially the entire area of a cross-section of said chamber along said orthogonal plane, said second sheet (F2) having a central aperture (F20) defining a passage for the air,
in such a way that the airflow through the canister during the scavenging stage is compelled to pass through said peripheral free space and through said central aperture of the first and second flexible sheets, thus advancing through the chamber in such a way as to reach all the areas of the chamber.

2. Canister according to claim 1, **characterized in that** said second opening (4) communicating with the atmosphere and said third opening (6) for communication to the intake manifold (11) of the engine (10) are arranged at an upper end wall (14) of the body of the canister, and **in that** within the canister (1) there is provided an inner separating wall (17) which defines first and second sub-chambers (181, 182), arranged in series relative to each other and both containing adsorbing material (18), each of said sub-chamber (181,182) including flexible sheets floatably supported within the particles or granules of adsorbed material (18),

## Patentansprüche

1. Einsatz (1) zum Filtern von aus einem Kraftfahrzeug-Kraftstofftank (3) kommenden Kraftstoffdämpfen,
wobei der Einsatz (1) einen hohlen Körper umfasst, der wenigstens eine Kammer (180) bildet, die adsorbierendes Material (18) zum Adsorbieren von Kraftstoffdämpfen enthält, wobei das Material die Form von Partikeln oder Körnern hat und der Einsatz eine erste Öffnung (4) zur Verbindung mit einer Entlüftungsleitung (2) des Tanks (3), eine zweite Öffnung (5), die mit der Umgebung in Verbindung steht, und eine dritte Öffnung (6) zur Verbindung mit einer Leitung (7) aufweist, die mit dem Ansaugkrümmer (11) des Verbrennungsmotors (10) des Kraftfahrzeugs verbunden ist,
so dass, wenn der Verbrennungsmotor (10) nicht in Betrieb ist, im Inneren des Tanks (3) erzeugte Kraftstoffdämpfe durch das adsorbierende Material (18) adsorbiert werden, während, wenn der Verbrennungsmotor (10) in Betrieb ist, ein über die zweite Öffnung (5) geleiteter Luftstrom in die Kammer (180) des Einsatzes (1) angesaugt und durch das adsorbierende Material (18) sowie durch die dritte Öffnung (6) hindurch auf die mit dem Ansaugkrümmer (11) des Verbrennungsmotors (10) verbundene Leitung (7) zu befördert wird, so dass Spülen des adsorbierenden Materials (18) erreicht wird und zuvor durch das adsorbierende Material (18) adsorbierte Kraftstoffpartikel entfernt und in den Motor (10) hinein befördert werden,
wobei im Inneren der Kammer (180) des Einsatzes (1) eine oder mehrere Platte/n (F1, F2, F3, F4, F5, F6) aus einem Material angeordnet ist/sind, das im Wesentlichen undurchlässig für Luft ist, und die frei schwebend in den Partikeln oder Körnern aus adsorbiertem Material (18) so getragen werden, dass ein gewundener Verbindungsweg zwischen der zweiten Öffnung (4), die mit der Umgebung in Verbindung steht und der dritten Öffnung (7) gebildet wird, die mit dem Ansaugkrümmer (11) des Verbrennungsmotors (10) in Verbindung steht,
wobei die wenigstens eine Kammer (180; 181, 182) zwei einander gegenüberliegende Stirnwände (14, 16) hat und sich in einer Längsrichtung zwischen den Stirnwänden erstreckt, und die Platten (F1-F5) in Ebenen angeordnet sind, die im Wesentlichen rechtwinklig zu der Längsrichtung sind,
wobei der Einsatz **dadurch gekennzeichnet ist, dass** die für Luft undurchlässigen Platten (F1-F6) flexible Platten sind, die aus Filz, Papier oder Karton, Kunststoffmaterial oder Metallmaterial bestehen, schwebend innerhalb der Partikel oder Körner aus adsorbiertem Material getragen werden, und einschließen:
wenigstens eine erste flexible Platte (F1), die im Wesentlichen in der Mitte der Kammer in einer Ebene senkrecht zu der Längsrichtung angeordnet ist, und die eine Fläche einnimmt, die kleiner ist als die Fläche eines Querschnitts der Kammer in der senkrechten Ebene, so dass ein freier Raum am Rand um die flexible Platte (F1) herum zum Durchlassen von Luft verbleibt, und
wenigstens eine zweite flexible Platte (F2), die im Wesentlichen in einer Ebene senkrecht zu der Längsrichtung angeordnet ist, in Längsrichtung von der Ebene der ersten Platte (F1) beabstandet ist und im Wesentlichen die gesamte Fläche eines Querschnitts der Kammer in der senkrechten Ebene einnimmt, wobei die zweite Platte (F2) eine Mittelöffnung (F20) hat, die einen Durchlass für die Luft bildet,
so dass der Luftstrom durch den Einsatz während der Spül-Phase gezwungen wird, durch den freien Raum am Rand sowie durch die Mittelöffnung der ersten bzw. der zweiten flexiblen Platte hindurchzutreten und so durch die Kammer zu strömen, dass er alle Bereiche der Kammer erreicht.

2. Einsatz nach Anspruch 1, **dadurch gekennzeichnet, dass** die zweite Öffnung (4), die mit der Umgebung in Verbindung steht, und die dritte Öffnung (6) zur Verbindung mit dem Ansaugkrümmer (11) des Motors (10) an einer oberen Abschlusswand (14) des Körpers des Einsatzes angeordnet sind, und dass im Inneren des Einsatzes (1) eine innere Trennwand (17) vorhanden ist, die eine erste und eine zweite Teilkammer (181, 182) bildet, die in Reihe relativ zueinander angeordnet sind und beide adsorbierendes Material (18) enthalten, wobei jede der Teilkammern (181, 182) flexible Platten enthält, die schwebend innerhalb der Partikel oder Körner aus adsorbiertem Material (18) getragen werden.

## Revendications

1. Absorbeur (1) pour filtrer des vapeurs de carburant provenant d'un réservoir de carburant de véhicule automobile (3),
dans lequel ledit absorbeur (1) comprend un corps creux définissant au moins une chambre (180) contenant un matériau adsorbant (18) pour adsorber les vapeurs de carburant, ledit matériau se présentant sous la forme de particules ou de granules, et ledit absorbeur ayant une première ouverture (4) pour la communication avec un conduit d'évacuation (2) du réservoir (3), une deuxième ouverture (5) communiquant avec l'atmosphère, et une troisième ouverture (6) pour la communication avec un conduit (7) relié au collecteur d'admission (11) du moteur à combustion interne (10) du véhicule automobile,
de manière à ce que, lorsque le moteur à combustion interne (10) est inactif, toute vapeur de carburant générée dans le réservoir (3) soit adsorbée par ledit matériau adsorbant (18), tandis que lorsque le moteur à combustion interne (10) est en fonctionnement, un flux d'air prélevé de l'atmosphère à travers ladite deuxième ouverture (5) est aspiré dans la chambre (180) de l'absorbeur (1) et transporté à travers le matériau adsorbant (18) et à travers ladite troisième ouverture (6) vers ledit conduit (7) relié au collecteur d'admission (11) du moteur à combustion interne (10), obtenant ainsi un balayage du matériau adsorbant (18) avec un retrait et un transport dans le moteur (10) des particules de carburant préalablement adsorbées par le matériau adsorbant (18),
où, dans la chambre (180) de l'absorbeur (1), est/sont agencée(s) une ou plusieurs feuille(s) (F1, F2, F3, F4, F5, F6) d'un matériau essentiellement imperméable à l'air, qui est/sont librement supportée(s) de manière flottante dans les particules ou les granules de matériau adsorbé (18), de manière à définir un chemin tortueux de communication entre ladite deuxième ouverture (4) communiquant avec l'atmosphère et ladite troisième ouverture (7) communiquant avec le collecteur d'admission (11) du moteur à combustion interne (10),
dans lequel ladite au moins une chambre (180 ; 181, 182) a deux parois d'extrémité opposées (14, 16) et s'étend le long d'une direction longitudinale entre lesdites parois d'extrémité, et lesdites feuilles (F1-F5) sont agencées le long de plans essentiellement orthogonaux à ladite direction longitudinale,
ledit absorbeur étant **caractérisé en ce que** lesdites feuilles imperméables à l'air (F1-F6) sont des feuilles souples réalisées en feutre, papier ou carton, matière synthétique ou matériau métallique, supportées de manière flottante dans les particules ou les granules de matériau adsorbé (18), comportant :
au moins une première feuille souple (F1) agencée essentiellement au centre de ladite chambre, le long d'un plan orthogonal à ladite direction longitudinale, et occupe une surface qui est inférieure à la surface d'une section transversale de ladite chambre le long dudit plan orthogonal, de manière à laisser un espace libre périphérique autour de ladite feuille souple (F1) pour le passage de l'air, et
au moins une deuxième feuille souple (F2) agencée essentiellement le long d'un plan orthogonal à ladite direction longitudinale, qui est espacée longitudinalement du plan de ladite première feuille (F1) et occupe essentiellement toute la surface d'une section transversale de ladite chambre le long dudit plan orthogonal, ladite deuxième feuille (F2) ayant un orifice central (F20) définissant un passage pour l'air,
de manière à ce que le flux d'air à travers l'absorbeur pendant l'étape de balayage soit obligé de passer à travers ledit espace libre périphérique et à travers ledit orifice central des première et deuxième feuilles souples, avançant ainsi à travers la chambre de manière à atteindre toutes les surfaces de la chambre.

2. Absorbeur selon la revendication 1, **caractérisé en ce que** ladite deuxième ouverture (4) communiquant avec l'atmosphère et ladite troisième ouverture (6) pour la communication avec le collecteur d'admission (11) du moteur (10) sont agencées au niveau d'une paroi d'extrémité supérieure (14) du corps de l'absorbeur, et **en ce que**, dans l'absorbeur (1), une paroi de séparation interne (17) est prévue, laquelle paroi définit des première et deuxième sous-chambres (181, 182), agencées en série l'une par rapport à l'autre et contenant toutes les deux un matériau adsorbant (18), chacune desdites sous-chambres (181, 182) comportant des feuilles souples supportées de manière flottante dans les particules ou les granules de matériau adsorbé (18).
